# EUROPÄISCHE PATENTSCHRIFT

(11) **EP 4 052 555 B1**
(45) Veröffentlichungstag und Bekanntmachung des Hinweises auf die Patenterteilung: **14.08.2024**
(21) Anmeldenummer: 21161046.4
(22) Anmeldetag: 05.03.2021
(51) Int. Cl.: A01C 15/02, A01C 23/02

(54) **AUSBRINGVORRICHTUNG UND VERFAHREN ZUM AUSBRINGEN EINES PASTÖSEN DÜNGEMITTELS**
DISPENSING DEVICE AND METHOD FOR DISPENSING A PASTE FERTILIZER
DISPOSITIF DE DISTRIBUTION ET PROCÉDÉ DE DISTRIBUTION D'UN ENGRAIS PÂTEUX

(43) Veröffentlichungstag der Anmeldung: 07.09.2022
(73) Patentinhaber: Hauert MANNA Düngerwerke GmbH, 90411 Nürnberg (DE)
(72) Erfinder: Kuczera, Tomasz, 90766 Fürth (DE); Eberspächer, Ludwig, 90419 Nürnberg (DE)
(74) Vertreter: Wunderlich & Heim Patentanwälte PartG mbB

(56) Entgegenhaltungen:
- DE-A1- 102004 028 291
- DE-A1- 102010 048 751
- KR-B1- 100 468 411
- US-A1- 2014 216 311

## Beschreibung

Die Erfindung betrifft eine Ausbringvorrichtung zum Ausbringen eines pastösen Düngemittels, mit einer Aufnahme zum Aufnehmen eines Vorrats an pastösem Düngemittel und mindestens einer Ausbringöffnung zum Ausbringen des pastösen Düngemittels.

Eine Vorrichtung ist aus der DE 10 2010 048 751 A1 bekannt. Diese bekannte Vorrichtung verfolgt den Einsatz von Flüssigdünger, welcher aus einem Gefäß mittels eines Schlauches angesaugt, anschließend mittels Pumpe und Ausbringdüse in einen Pflanzenwurzelbereich appliziert wird.

Die Erfindung betrifft weiterhin ein Verfahren zum Ausbringen eines pastösen Düngemittels mit einer solchen Ausbringvorrichtung.

Für ein möglichst optimales Pflanzenwachstum ist eine bedarfsgerechte Zuführung von Nährstoffen durch Düngemittel maßgeblich. Wird einer Pflanze eine zu geringe Menge an Düngemittel zugeführt, bleibt ein Teil ihres Wachstumspotentials beziehungsweise ihres potenzialen Fruchtertrags ungenutzt. Eine zu hohe Dosierung von Düngemittel kann die Düngekosten erheblich beeinflussen und zu einer Schädigung bis hin zum Abtöten der Pflanze führen.

Flüssige Düngemittel erlauben eine gute Dosierbarkeit für ein bedarfsgerechtes Zuführen. Allerdings können flüssige Düngemittel leicht ausgewaschen werden, so dass sie in der Regel nur für eine relativ kurzfristige Nährstoffversorgung für die Pflanze zur Verfügung stehen. Es müssen daher entsprechend häufige Gaben von flüssigem Düngemittel vorgesehen werden, was insbesondere für einen gewerblichen Pflanzenanbau arbeitsintensiv und damit nachteilig ist.

Insbesondere bei Containerpflanzen mit langen Kulturzeiten werden in den meisten Fällen Düngemittelgranulate verwendet, die in das Pflanzsubstrat eingemischt werden. Etwa durch eine Umhüllung der Granulate können Langzeitdünger geschaffen werden, welche eine Nährstoffversorgung über einen längeren Zeitraum sicherstellen. Dennoch ist es in vielen Fällen erforderlich, eine Nachdüngung vorzusehen.

Insbesondere im gewerblichen Pflanzenanbau werden für eine derartige Nachdüngung Ausbringvorrichtungen zum Zuführen granulierter Düngemittel eingesetzt. Allerdings sind solche Ausbringvorrichtungen mit Nachteilen verbunden. So lässt sich eine Staubbildung durch Abrieb der Granulatkörner nicht vermeiden, wobei Staub die Pflanzenblätter verbrennen kann sowie unter Einwirkung von Luftfeuchtigkeit die Ausbringöffnung des Dosiergerätes verengen und sogar insgesamt verschließen kann.

Aus der EP 3 216 336 B1 ist ein pastöses Düngemittel mit einer Dosiereinrichtung bekannt. Dabei kann das pastöse Düngemittel in einen druckempfindlichen Behälter abgefüllt werden, welcher an seinem Bodenbereich eine ventilartige Abgabeöffnung mit Lamellenelementen aufweist, welche sich bei Erhöhung des Innendrucks öffnet und so eine Dosiermenge an viskosem Düngemittel abgeben kann. Diese bekannte Ausbringvorrichtung ist für die Abgabe kleiner Dosiermengen an viskosem Düngemittel geeignet, wie es etwa für Topfpflanzen im häuslichen Bereich besonders zweckmäßig und gewünscht ist.

Für einen gewerblichen Pflanzenanbau, insbesondere bei einer Düngung einer Vielzahl von Pflanzcontainern ist eine derartige Ausbringvorrichtung wenig geeignet und kaum wirtschaftlich.

Der Erfindung liegt die **Aufgabe** zugrunde, eine Ausbringvorrichtung und ein Verfahren anzugeben, mit welchen ein pastöses Düngemittel besonders effizient ausgebracht werden kann.

Die Aufgabe wird zum einen durch eine Ausbringvorrichtung mit den Merkmalen des Anspruchs 1 und zum anderen durch ein Verfahren mit den Merkmalen des Anspruchs 8 gelöst. Bevorzugte Ausführungsformen der Erfindung sind in den abhängigen Ansprüchen angegeben.

Die erfindungsgemäße Ausbringvorrichtung sieht eine lanzenartige Ausgabeeinrichtung vor, welche einen Dosierraum für pastöses Düngemittel aufweist und über eine Versorgungsleitung mit der Aufnahme verbunden ist, dass an der Aufnahme oder der Ausgabeeinrichtung eine Pumpeinrichtung vorgesehen ist, welche zum Erzeugen eines Ausgabedrucks auf das pastöse Düngemittel in dem Dosierräum ausgebildet ist, und dass die Ausgabeeinrichtung eine Lanzenspitze aufweist, an welcher die mindestens eine Ausbringöffnung zum Ausgeben einer Dosiermenge an pastösem Düngemittel angeordnet ist.

Eine Grundidee der Erfindung besteht darin, eine Ausbringvorrichtung mit einer Aufnahme zur Bevorratung einer größeren Menge an pastösem Düngemittel sowie eine lanzenartige Ausgabeeinrichtung mit der mindestens einen Ausbringöffnung an einer Lanzenspitze vorzusehen. Die Aufnahme mit dem Vorrat an pastösem Düngemittel ist dabei über eine Versorgungsleitung mit der Ausgabeeinrichtung und insbesondere einem darin vorgesehenen Dosierraum verbunden. Der Dosierraum kann dabei eine Menge an pastösem Düngemittel aufnehmen, welche für eine abzugebende Dosiermenge oder für mehrere abzugebende Dosiermengen ausgebildet ist. Insbesondere ist der Dosierraum kleiner als der Bevorratungsraum der Aufnahme. Die lanzenförmige Ausgabeeinrichtung ist dabei relativ leicht und kompakt ausgebildet, so dass diese etwa manuell gut zu bedienen ist sowie leicht und zielgenau bewegt werden kann.

Weiterhin bietet die erfindungsgemäße Verwendung eines pastösen Düngemittels die Möglichkeit, eine gewünschte Nährstoffmenge definiert einzustellen und an eine Pflanze abzugeben. Ein pastöses Düngemittel erlaubt durch die Fließfähigkeit unter Druck und die ansonsten bestehende plastische Eigenschaft eine exakte Dosierung wie bei einem flüssigen Düngemittel. Nach der Abgabe ist das pastöse Düngemittel im Wesentlichen formstabil, so dass eine längerdauernde Nährstoffabgabe und Nährstoffversorgung an die Pflanze erreicht werden kann.

Dabei bietet das pastöse Düngemittel gegenüber Granulaten noch den Vorteil der Staubfreiheit, einer guten und besonders gleichmäßigen Lösbarkeit sowie einer erhöhten Ortsstabilität durch adhäsive Eigenschaften der pastösen Masse. So ist eine Verlagerung des am Pflanzsubstrat oder am Pflanzcontainer anhaftenden pastösen Düngemittels etwa durch Wind kaum möglich.

Ein besonders kompakter Aufbau der Ausbringvorrichtung wird nach einer Weiterbildung der Erfindung dadurch erzielt, dass die Pumpeinrichtung zum Ansaugen von pastösem Düngemittel aus der Aufnahme und Einleiten in den Dosierraum der Ausgabeeinrichtung ausgebildet ist. Somit kann an der Ausbringeinrichtung nur eine einzelne Pumpeinrichtung vorgesehen werden, welche sowohl für das Fördern des Düngemittels von der Aufnahme in den Dosierraum als auch von dem Dosierraum zu der Ausbringöffnung vorgesehen ist. Besonders zweckmäßig ist das Anordnen der Pumpeinrichtung integriert in die lanzenartige Ausgabeeinrichtung. Alternativ oder ergänzend kann die Pumpeinrichtung dabei grundsätzlich an der Aufnahme vorgesehen sein.

Besonders zweckmäßig ist es nach einer Ausführungsform der Erfindung, dass die Pumpeinrichtung als eine Kolbenpumpe oder eine Schneckenpumpe ausgebildet ist. Die Kolbenpumpe erlaubt dabei bei Anordnung in der lanzenartigen Ausgabeeinrichtung in einer Hubrichtung ein Ansaugen des pastösen Düngemittels aus der Aufnahme in den Dosierraum sowie in der entgegengesetzten Hubrichtung ein Ausbringen des pastösen Düngemittels in dem Dosierraum aus der Ausbringöffnung. Unerwünschte Rückströme des pastösen Düngemittels können durch Anordnung von Rückschlagventilen, etwa Membranventilen, vermieden werden, insbesondere durch ein Rückschlagventil an der Versorgungsleitung zwischen der Aufnahme und dem Dosierraum.

Mittels einer Schneckenpumpe kann eine kontinuierliche Förderleistung erzielt werden. Durch Einstellung der Drehrichtung können entsprechende unterschiedliche Förderrichtungen eingestellt werden.

Insbesondere bei einer Kolbenpumpe kann eine manuelle Betätigung der Pumpeinrichtung vorgesehen sein. Für einen effizienten Betrieb ist es nach einer Weiterbildung der Erfindung vorteilhaft, dass die Pumpeinrichtung mittels eines elektrischen Antriebs antreibbar ist. Zur Energieversorgung können eine Batterie und insbesondere ein wiederaufladbarer Akkumulator vorgesehen sein, welcher vorzugsweise an der Aufnahme angeordnet ist.

Grundsätzlich kann die Abgabe der Dosiermenge manuell erfolgen. Für ein besonders exaktes Dosieren ist es nach einer Weiterbildung der Erfindung vorteilhaft, dass ein Steuergerät vorgesehen ist, mit welchem eine auszugebende Dosiermenge einstellbar ist, und dass die Pumpeinrichtung mit dem Steuergerät verbunden ist. Über eine entsprechende Eingabeeinrichtung kann in das Steuergerät die gewünschte Dosiermenge eingegeben werden. Hierfür kann das Steuergerät ein Anzeigedisplay zur Anzeige der eingestellten Dosiermenge sowie entsprechende Bedienelemente aufweisen. Über das Steuergerät werden die Pumpeinrichtung und insbesondere ein elektrischer Antrieb der Pumpeinrichtung so angesteuert, dass die gewünschte eingestellte Menge an Düngemittel ausgegeben wird.

Besonders vorteilhaft ist es nach einer weiteren Ausführungsform der Erfindung, dass an dem Steuergerät ein manueller Auslöser vorgesehen ist, über welchen die Ausgabe einer Dosiermenge auslösbar ist. Der Auslöser kann insbesondere ein einfacher Schalter oder Taster sein, welcher in einer ergonomisch zweckmäßigen Weise durch einen einzelnen Finger betätigt werden kann. Durch den Auslöser kann jeweils die Abgabe einer voreingestellten Dosiermenge ausgelöst werden. Dies ist insbesondere für eine mehrfache wiederholte Abgabe der gleichen Dosiermenge vorteilhaft, wie es etwa bei der Düngung gleicher Pflanzcontainer erforderlich ist.

Die erfindungsgemäße Ausbringvorrichtung sieht vor, dass der Vorrat an pastösem Düngemittel in einem wechselbaren Behältnis, nämlich einem flexiblen druckdichten Beutel, enthalten ist, der in die Aufnahme einsetzbar ist, und dass das Behältnis einen Anschluss aufweist, welcher mit der Versorgungsleitung lösbar verbindbar ist. Das Behältnis kann eine feste Kartusche oder insbesondere ein flexibler druckdichter Beutel, beispielweise aus einer Kunststofffolie sein.

Das vorgefüllte und verpackte Behältnis kann so einfach in die Aufnahme eingesetzt werden, ohne dass ein Bediener mit dem viskosen Düngemittel unmittelbar in Kontakt kommt. Das Behältnis weist dabei einen Anschluss auf, welcher mit einem lösbaren Anschlusselement mit der Versorgungsleitung verbunden werden kann. Beim Anschließen kann gleichzeitig durch ein Ventil oder durch eine durchstechbare Membran der Beutel geöffnet werden, so dass Düngemittel in die Versorgungsleitung eintreten kann. Nach einem Entleeren des Behältnisses kann dieses in einfacher Weise durch ein neues Behältnis ausgewechselt werden. Auch bei einer gewünschten Änderung des Düngemittels kann ein nur teilweise entleertes Behältnis in einfacher Weise der Aufnahme entnommen und durch ein neues Behältnis mit einem anderen Düngemittel ausgetauscht werden. Das nur teilweise entleerte Behältnis kann nach einem gegebenenfalls notwendigen Verschließen zwischengelagert und für eine spätere Düngung wiederverwendet werden.

Die Ausgabeeinrichtung mit der Lanzenspitze kann für eine oberirdische Düngemittelabgabe ausgebildet sein. Besonders zweckmäßig ist es nach einer Weiterbildung der Erfindung, dass die Lanzenspitze zum Einstecken in einen Boden oder ein Pflanzsubstrat ausgebildet ist und dass die mindestens eine Ausbringöffnung in einem seitlichen Bereich der Lanzenspitze angeordnet ist. Hierdurch ist ein Einbringen des Düngemittels unmittelbar in die Erde oder ein Pflanzsubstrat möglich. Dies erlaubt eine besonders zuverlässige Düngung. An der Lanzenspitze können ein oder mehrere Ausbringöffnungen vorgesehen sein.

Die erfindungsgemäße Ausbringvorrichtung ist tragbar ausgebildet, wobei die Aufnahme für das pastöse Düngemittel an einer Rückentrage angeordnet ist und die lanzenartige Ausgabeeinrichtung mit einer Hand- und/oder Armhalterung versehen ist. Die Ausbringvorrichtung ist dabei gut durch eine Bedienperson handhabbar und kann besonders flexibel eingesetzt werden. Vorzugsweise ist das Steuergerät im Bereich der Hand- und/oder Armhalterung angeordnet, was eine Bedienbarkeit weiter erleichtert.

Eine alternative Ausführungsform, die nicht unter die Erfindung fällt, besteht darin, dass die Ausgabevorrichtung stationär in einer Anlage zum Erzeugen von Pflanzcontainern angeordnet ist. Bei einer derartigen Anlage werden Pflanzen oder Pflanzenteile in einem Container mit Erde oder Pflanzsubstrat eingesetzt. Bei diesem Pflanzvorgang kann die Ausbringvorrichtung mit der lanzenartigen Ausgabeeinrichtung so angeordnet sein, dass beim oder nach dem Befüllen des Containers mit Erde oder Substrat ein pastöses Düngemittel in den Pflanzcontainer eingebracht wird.

Gemäß einer weiteren alternativen Ausgestaltung, die nicht unter die Erfindung fällt, kann die Ausbringvorrichtung mobil an einem Fahrzeug angeordnet sein. Hierdurch kann ein effizientes Ausbringen von Düngemittel an Pflanzen auf größeren Flächen, etwa in Freigeländen und Parkanlagen, vorgenommen werden. Das Fahrzeug kann durch eine Bedienperson oder selbsttätig betrieben werden.

Die Erfindung umfasst weiterhin ein Verfahren zum Ausbringen eines pastösen Düngemittels mit der zuvor beschriebenen Ausbringvorrichtung, wobei das Verfahren vorsieht, dass pastöses Düngemittel in einer Aufnahme der Ausbringvorrichtung bevorratet wird, dass das pastöse Düngemittel über eine lanzenartige Ausgabeeinrichtung über mindestens eine Ausbringöffnung ausgegeben wird, wobei die Ausgabeeinrichtung mit der Aufnahme über eine Versorgungsleitung verbunden ist, dass zum Ausgeben des pastösen Düngemittels mittels einer Pumpeinrichtung an der Ausgabeeinrichtung ein Ausgabedruck in einem Dosierraum der Ausgabeeinrichtung erzeugt wird und dass eine Dosiermenge an pastösem Düngemittel über eine Lanzenspitze mit der mindestens einen Ausbringöffnung der Ausgabeeinrichtung ausgegeben wird.

Mit dem erfindungsgemäßen Verfahren können die zuvor beschriebenen Vorteile erzielt werden. Das Verfahren kann insbesondere zur Düngung von Pflanzen in Pflanzcontainern aber auch im Freiland eingesetzt werden.

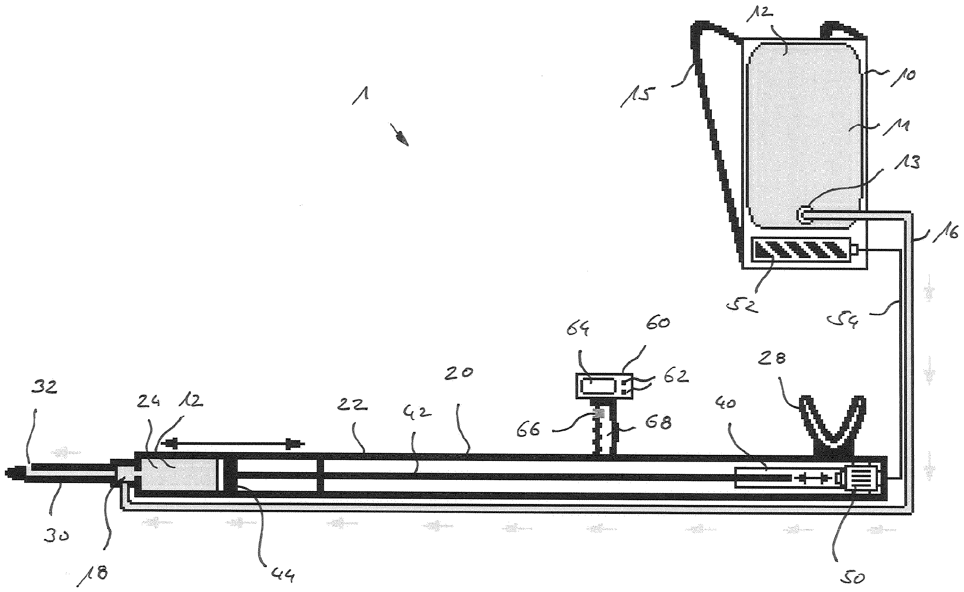

Die Erfindung wird nachfolgend anhand eines bevorzugten Ausführungsbeispieles weiter beschrieben, welches schematisch in der Zeichnung dargestellt ist.

In der einzigen Figur ist stark schematisiert eine erfindungsgemäße Ausbringvorrichtung 1 mit einer lanzenförmigen Ausgabeeinrichtung 20 und einer Aufnahme 10 für ein pastöses Düngemittel 12 dargestellt. Die kastenförmige Aufnahme 10 ist an einer Rückentrage 15 mit Schulterriemen und gegebenenfalls einem Hüftgurt zum Tragen durch eine Bedienperson ausgebildet. Für ein leichtes Befüllen und einen schnellen Wechsel des Düngemittels 12 ist dieses in einem Behältnis 11 eingefüllt, welches ein flexibler druckdichter Beutel ist.

In einem unteren Bereich des Behältnisses 11, welches in der Aufnahme 10 lösbar gehalten ist, ist ein Anschluss 13 zum lösbaren Anschließen einer Versorgungsleitung 16 vorgesehen, welche sich von der Aufnahme 10 bis zu der Ausgabeeinrichtung 20 erstreckt. Über die Versorgungsleitung 16 kann pastöses Düngemittel 12 aus der Aufnahme 10 einem Dosierraum 24 in einem etwa rohrförmigen Gehäuse 22 der Ausgabeeinrichtung 20 zugeführt werden, wie mit einer Reihe von Pfeilen schematisch verdeutlicht ist.

Das Düngemittel 12 hat eine zumindest unter Druck fließfähige, pastöse Konsistenz und kann verschiedene Düngerbestandteile aufweisen, insbesondere N, P, K sowie weitere Mineralstoffe und Nährstoffe zur Pflanzenversorgung. Je nach Düngeaufgabe kann ein geeignetes Düngemittel durch Wechseln des Behältnisses 11 in der Aufnahme 10 eingesetzt werden.

Innerhalb des Gehäuses 22 der Ausgabeeinrichtung 20 ist eine Pumpeinrichtung 40 mit einer Kolbenstange 42 vorgesehen, über welche ein scheibenförmiger Kolben 44 innerhalb des rohrförmigen Gehäuses 22 axial verschoben werden kann, wie durch einen doppelseitigen Pfeil angedeutet ist. Die Kolbenstange 42 der Pumpeinrichtung 40 kann dabei über einen Elektroantrieb 50 reversierend betrieben werden. Der Elektroantrieb 50 wird von einem Akkumulator 52 in der Aufnahme 10 über eine Stromleitung 54 mit elektrischer Energie versorgt.

Zum Befüllen des Dosierraumes 24 mit pastösem Düngemittel 12 wird der Kolben 44 in Richtung auf den elektrischen Antrieb 50 rückgestellt, wobei pastöses Düngemittel 12 über die Versorgungsleitung 16 aus der Aufnahme 10 angesaugt wird. Bei einem entgegengesetzten Bewegen des Kolbens 44 in Richtung auf eine Lanzenspitze 30 mit einer Ausbringöffnung 32 wird das pastöse Düngemittel 12 in dem Dosierraum 24 nach vorne gedrückt, so dass dieses aus der vorderen Ausbringöffnung 32 austritt.

Über eine Ventileinrichtung 18 zwischen dem Gehäuse 22 und der Lanzenspitze 30 wird verhindert, dass einerseits beim Ansaugen des pastösen Düngemittels 12 aus der Aufnahme 10 Düngemittel 12 aus der röhrenförmigen Lanzenspitze 30 in den Dosierraum rückströmt und andererseits beim Austreiben des Düngemittels 12 aus der Ausbringöffnung 32 pastöses Düngemittel 12 in die Versorgungsleitung 16 rückströmt, welche ebenfalls an der Ventileinrichtung 18 angeschlossen ist. Hierzu kann die Ventileinrichtung 18 entsprechende Rückschlagventile, insbesondere Membranventile, aufweisen.

Die dargestellte Ausführungsform der erfindungsgemäßen Ausbringvorrichtung 1 ist tragbar ausgeführt, wobei an der lanzenförmigen Ausgabeeinrichtung 20 eine schematisch angedeutete Armhalterung 28, insbesondere eine Ellenbogenstütze, und ein Griff 68 angeordnet sind. Am oberen Ende des Griffs 68 ist ein Steuergerät 60 mit Bedienelementen 62 und einem Anzeigefeld 64 angeordnet. Über das Steuergerät 60 kann insbesondere die Pumpeinrichtung 40 mit dem Antrieb 50 angesteuert werden. Über die Bedienelemente 62, welche als Knöpfe oder Tasten ausgebildet sein können, kann eine auszugebende Dosiermenge voreingestellt werden. Die Dosiermenge kann dabei entsprechend einer Programmvorgabe an dem Anzeigefeld ausgewählt oder direkt als Zahl eingegeben werden.

Bei einer Programmauswahl kann dies abhängig von einem Containervolumen, der ausgewählten und eingesetzten Art des Düngemittels 12 sowie abhängig von weiteren Parametern, etwa den zu düngenden Pflanzen, ausgewählt werden. Über einen Auslöser 66 am Griff 68 kann dann durch eine einfache Fingerbetätigung durch eine Bedienperson ein Ausgabevorgang mit der eingestellten Dosiermenge an Düngemittel 12 über die Ausbringvorrichtung 32 ausgelöst werden.

Über das Anzeigefeld 64 des Steuergerätes 60 können auch Daten, etwa zum Ladezustand des Akkumulators 52, zum Füllstand des Düngemittels 12 in der Aufnahme 10 sowie Angaben zur Anzahl der bereits durchgeführten Dosiervorgänge oder der noch möglichen Dosiervorgänge angezeigt und abgefragt werden. Die einzelnen Komponenten an der Ausgabeeinrichtung 20 sind dabei so balanciert angeordnet, dass die lanzenförmige Ausgabeeinrichtung 20 ergonomisch entlang eines Arms einer Bedienperson gehalten werden kann.

Über die Lanzenspitze 30 kann dabei punktgenau pastöses Düngemittel 12 ausgebracht werden, wobei die längliche schmale Lanzenspitze 30 auch ein Einstechen in den Boden oder ein Pflanzsubstrat erlaubt, um Düngemittel 12 unterhalb der Oberfläche einzubringen.

## Patentansprüche

1. Ausbringvorrichtung (1) zum Ausbringen eines Düngemittels (12), mit
- einer Aufnahme (10) zum Aufnehmen eines Vorrats an Düngemittel (12) und
- mindestens einer Ausbringöffnung (32) zum Ausbringen des Düngemittels (12), wobei
- das Düngemittel in der Aufnahme (10) ein pastöses Düngemittel (12) ist,
- eine lanzenartige Ausgabeeinrichtung (20) vorgesehen ist, welche einen Dosierraum (24) für pastöses Düngemittel (12) aufweist und über eine Versorgungsleitung (16) mit der Aufnahme (10) verbunden ist,
- an der Aufnahme (10) oder der Ausgabeeinrichtung (20) eine Pumpeinrichtung (40) vorgesehen ist, welche zum Erzeugen eines Ausgabedrucks auf das pastöse Düngemittel (12) in dem Dosierraum (24) ausgebildet ist, wobei eine Fließfähigkeit des pastösen Düngemittels unter Druck ermöglicht ist,
- die Ausgabeeinrichtung (20) eine Lanzenspitze (30) aufweist, an welcher die mindestens eine Ausbringöffnung (32) zum Ausgeben einer Dosiermenge an pastösem Düngemittel (12) angeordnet ist,
- der Vorrat an pastösem Düngemittel (12) in einem wechselbaren Behältnis (11), nämlich in einem flexiblen druckdichten Beutel, enthalten ist, der in die Aufnahme (10) einsetzbar ist,
- das Behältnis (11) einen Anschluss (13) aufweist, welcher mit der Versorgungsleitung (16) lösbar verbindbar ist, und
- die Ausbringvorrichtung (1) tragbar ausgebildet ist, wobei die Aufnahme (10) für das pastöse Düngemittel (12) an einer Rückentrage (15) angeordnet ist und die lanzenartige Ausgabeeinrichtung (20) mit einer Hand- und/oder Armhalterung (28) versehen ist.

2. Ausbringvorrichtung nach Anspruch 1,
**dadurch gekennzeichnet,**
**dass** die Pumpeinrichtung (40) zum Ansaugen von pastösem Düngemittel (12) aus der Aufnahme (10) und Einleiten in den Dosierraum (24) der Ausgabeeinrichtung (20) ausgebildet ist.

3. Ausbringvorrichtung nach Anspruch 1 oder 2,
**dadurch gekennzeichnet,**
**dass** die Pumpeinrichtung (40) als eine Kolbenpumpe oder eine Schneckenpumpe ausgebildet ist.

4. Ausbringvorrichtung nach einem der Ansprüche 1 bis 3,
**dadurch gekennzeichnet,**
**dass** die Pumpeinrichtung (40) mittels eines elektrischen Antriebs (50) antreibbar ist.

5. Ausbringvorrichtung nach einem der Ansprüche 1 bis 4,
**dadurch gekennzeichnet,**
**dass** ein Steuergerät (60) vorgesehen ist, mit welchem eine auszugebende Dosiermenge einstellbar ist, und
**dass** die Pumpeinrichtung (40) mit dem Steuergerät (60) verbunden ist.

6. Ausbringvorrichtung nach Anspruch 5,
**dadurch gekennzeichnet,**
**dass** an dem Steuergerät (60) ein manueller Auslöser (66) vorgesehen ist, über welchen die Ausgabe einer Dosiermenge auslösbar ist.

7. Ausbringvorrichtung nach einem der Ansprüche 1 bis 6,
**dadurch gekennzeichnet,**
**dass** die Lanzenspitze (30) zum Einstecken in einen Boden oder ein Pflanzsubstrat ausgebildet ist und
**dass** die mindestens eine Ausbringöffnung (32) in einem seitlichen Bereich der Lanzenspitze (30) angeordnet ist.

8. Verfahren zum Ausbringen eines pastösen Düngemittels mit einer Ausbringvorrichtung (1) nach einem der Ansprüche 1 bis 7,
wobei das pastöse Düngemittel (12) in der Aufnahme (10) der Ausbringvorrichtung (1) bevorratet wird,
das pastöse Düngemittel (12) über die lanzenartige Ausgabeeinrichtung (20) über die mindestens eine Ausbringöffnung (32) ausgegeben wird, wobei die Ausgabeeinrichtung (20) mit der Aufnahme (10) über die Versorgungsleitung (16) verbunden ist,
zum Ausgeben des pastösen Düngemittels (12) mittels der Pumpeinrichtung (40) an der Ausgabeeinrichtung (20) ein Ausgabedruck in dem Dosierraum (24) der Ausgabeeinrichtung (20) erzeugt wird und eine Dosiermenge an pastösem Düngemittel (12) über die Lanzenspitze (30) mit der mindestens einen Ausbringöffnung (32) der Ausgabeeinrichtung (20) ausgegeben wird.

## Claims

1. Dispensing device (1) for dispensing a fertiliser (12), comprising
- a receptacle (10) for receiving a supply of fertiliser (12) and
- at least one dispensing opening (32) for dispensing the fertiliser (12), wherein
- the fertiliser in the receptacle (10) is a paste-like fertiliser (12),
- a lance-like output device (20) is provided, which comprises a metering chamber (24) for paste-like fertiliser (12) and is connected via a supply line (16) to the receptacle (10),
- provided on the receptacle (10) or the output device (20) is a pumping device (40), which is configured to generate a output pressure on the paste-like fertiliser (12) in the metering chamber (24), wherein a flowability of the paste-like fertiliser under pressure is facilitated,
- the output device (20) comprises a lance tip (30) on which the at least one dispensing opening (32) is arranged for outputing a metered quantity of paste-like fertiliser (12),
- the supply of paste-like fertiliser (12) is contained in an exchangeable container (11), namely in a flexible pressure-tight pouch, which can be inserted into the receptacle (10),
- the container (11) comprises a connection (13), which can be connected detachably to the supply line (16), and
- the dispensing device (1) is configured to be portable, wherein the receptacle (10) for the paste-like fertiliser (12) is arranged on a backpack (15) and the lance-like output device (20) is provided with a hand and/or arm mount (28).

2. Dispensing device according to claim 1,
**characterised in that**
the pumping device (40) is configured to aspirate paste-like fertiliser (12) from the receptacle (10) and feed it into the metering chamber (24) of the output device (20).

3. Dispensing device according to claim 1 or 2,
**characterised in that**
the pumping device (40) is configured as a reciprocating pump or a spiral pump.

4. Dispensing device according to any one of claims 1 to 3, **characterised in that**
the pumping device (40) can be driven by means of an electric drive (50).

5. Dispensing device according to any one of claims 1 to 4, **characterised in that**
a control device (60) is provided with which a metered quantity to be output can be set, and
that the pumping device (40) is connected to the control device (60).

6. Dispensing device according to claim 5,
**characterised in that**
provided on the control device (60) is a manual trigger (66), via which the output of a metered quantity can be triggered.

7. Dispensing device according to any one of claims 1 to 6,
**characterised in that**
the lance tip (30) is configured to be inserted into soil or a plant substrate and that the at least one dispensing opening (32) is arranged in a lateral area of the lance tip (30).

8. Method for dispensing a paste-like fertiliser with a dispensing device (1) according to any one of claims 1 to 7,
wherein
the paste-like fertiliser (12) is stored in the receptacle (10) of the dispensing device (1),
the paste-like fertiliser (12) is output via the lance-like output device (20) via the at least one dispensing opening (32), wherein the output device (20) is connected to the receptacle (10) via the supply line (16),
to output the paste-like fertiliser (12) a output pressure is generated by means of the pumping device (40) at the output device (20) in the metering chamber (24) of the output device (20) and
a metered quantity of paste-like fertiliser (12) is output via the lance tip (30) with the at least one dispensing opening (32) of the output device (20).

## Revendications

1. Dispositif de distribution (1) pour distribuer un engrais (12), avec
- un logement (10) pour recevoir un stock d'engrais (12) et
- au moins une ouverture de distribution (32) pour distribuer l'engrais (12), dans lequel
- l'engrais dans le logement (10) est un engrais (12) pâteux,
- un système de distribution (20) du type lance est prévu, lequel présente une chambre de dosage (24) pour un engrais (12) pâteux et est relié au logement (10) par l'intermédiaire d'une conduite d'alimentation (16),
- un système de pompage (40), lequel est réalisé pour produire une pression de distribution sur l'engrais (12) pâteux dans la chambre de dosage (24), est prévu sur le logement (10) ou le système de distribution (20), dans lequel une fluidité de l'engrais pâteux sous pression est permise,
- le système de distribution (20) présente une pointe de lance (30), sur laquelle est disposée l'au moins une ouverture de distribution (32) pour distribuer une quantité de dosage d'engrais (12) pâteux,
- le stock d'engrais (12) pâteux est contenu dans un récipient (11) interchangeable, à savoir dans un sachet flexible étanche à la pression, qui peut être inséré dans le logement (10),
- le récipient (11) présente un raccordement (13), lequel peut être relié de manière détachable à la conduite d'alimentation (16), et
- le dispositif de distribution (1) est réalisé de manière portable, dans lequel le logement (10) pour l'engrais (12) pâteux est disposé sur un dispositif de portage sur le dos (15) et le système de distribution (20) du type lance est pourvu d'un support pour la main et/ou pour le bras (28).

2. Dispositif de distribution selon la revendication 1,
**caractérisé en ce**
**que** le système de pompage (40) est réalisé pour aspirer un engrais (12) pâteux du logement (10) et l'introduire dans la chambre de dosage (24) du système de distribution (20).

3. Dispositif de distribution selon la revendication 1 ou 2,
**caractérisé en ce**
**que** le système de pompage (40) est réalisé en tant que pompe à piston ou pompe à vis.

4. Dispositif de distribution selon l'une quelconque des revendications 1 à 3, **caractérisé en ce**
**que** le système de pompage (40) peut être entraîné au moyen d'un entraînement électrique (50).

5. Dispositif de distribution selon l'une quelconque des revendications 1 à 4, **caractérisé en ce**
**qu'**un appareil de commande (60) est prévu, avec lequel une quantité de dosage à distribuer peut être réglée, et
**que** le système de pompage (40) est relié à l'appareil de commande (60).

6. Dispositif de distribution selon la revendication 5,
**caractérisé en ce**
**qu'**un déclencheur manuel (66), par l'intermédiaire duquel la distribution d'une quantité de dosage peut être déclenchée, est prévu sur l'appareil de commande (60).

7. Dispositif de distribution selon l'une quelconque des revendications 1 à 6, **caractérisé en ce**
**que** la pointe de lance (30) est réalisée pour être introduite dans un sol ou un substrat pour plantes et
**que** l'au moins une ouverture de distribution (32) est disposée dans une zone latérale de la pointe de lance (30).

8. Procédé pour distribuer un engrais pâteux avec un dispositif de distribution (1) selon l'une quelconque des revendications 1 à 7,
dans lequel l'engrais (12) pâteux est stocké dans le logement (10) du dispositif de distribution (1),
l'engrais (12) pâteux est distribué par l'intermédiaire du système de distribution (20) du type lance par l'au moins une ouverture de distribution (32), dans lequel le système de distribution (20) est relié au logement (10) par l'intermédiaire de la conduite d'alimentation (16),
une pression de distribution est produite dans la chambre de dosage (24) du système de distribution (20) pour distribuer l'engrais (12) pâteux au moyen du système de pompage (40) sur le système de distribution (20) et
une quantité de dosage d'engrais (12) pâteux est distribuée par l'intermédiaire de la pointe de lance (30) avec l'au moins une ouverture de distribution (32) du système de distribution (20).
